# EUROPÄISCHE PATENTSCHRIFT

(11) **EP 2 759 369 B1**
(45) Veröffentlichungstag und Bekanntmachung des Hinweises auf die Patenterteilung: **20.01.2016**
(21) Anmeldenummer: 14151974.4
(22) Anmeldetag: 21.01.2014
(51) Int. Cl.: B23Q 1/00, B23Q 3/12, B23Q 17/00

(54) **Bearbeitungseinheit für eine programmgesteuerte Werkzeugmaschine**
Machining unit for a CNC machine tool
Unité d'usinage pour une machine outil à contrôle numérique

(30) Priorität: 28.01.2013 DE 102013201328
(43) Veröffentlichungstag der Anmeldung: 30.07.2014
(73) Patentinhaber: DECKEL MAHO Pfronten GmbH, 87459 Pfronten (DE)
(72) Erfinder: Veittinger, Hans, 87448 Waltenhofen (DE)
(74) Vertreter: Beetz & Partner mbB

(56) Entgegenhaltungen:
- EP-A1- 1 889 685
- EP-A1- 2 210 700
- DE-A1- 10 351 347
- US-A- 5 783 887

## Beschreibung

Die Erfindung betrifft eine Bearbeitungseinheit für eine programmgesteuerte Werkzeugmaschine, beispielsweise für Bearbeitungszentren, Drehmaschinen od. dgl., mit einem am Maschinenständer verfahrbaren Gehäuse, mit einer im Gehäuse drehbar gelagerten Arbeitsspindel, mit einem Drehantrieb für die Arbeitsspindel, mit einer in der Arbeitsspindel vorgesehenen Werkzeugaufnahme mit Spannmitteln zum lösbaren genauen Positionieren eines Werkzeugschafts in der Werkzeugaufnahme und mit einer an der Arbeitsspindel vorgesehenen Messvorrichtung zur Positions- und Zustandsüberwachung eines in die Werkzeugaufnahme eingesetzten Werkzeugschafts, wobei diese Messeinrichtung eine Mehrzahl von Sensoren sowie eine Auswerteeinheit für die Messergebnisse der Sensoren aufweist.

Die Einzel- und auch Serienbearbeitung von Werkstücken in modernen spanenden Werkzeugmaschinen verlangt höchste Genauigkeiten und die strikte Einhaltung engster Toleranzbereiche. Um diese hohen Vorgaben zu erreichen und einzuhalten, müssen die am Bearbeitungsvorgang beteiligten Bauteile, d.h. die Werkstücke mit ihren Werkstückträgern (Paletten) und auch die Werkzeuge mit ihren Werkzeugaufnahmen und den Arbeitsspindeln, mit hoher Präzision positioniert und arretiert werden. Von besonderer Bedeutung sind die während der Bearbeitung vom Werkzeug erzeugten Späne, die im Arbeitsraum herumfliegen und sich auf den Bauteilen ablagern. Besondere Probleme ergeben sich dann, wenn Späne und andere Verunreinigungen sich an die in der Regel feinbearbeiteten Flächenpaare von Werkzeugkegel und Werkzeugaufnahme bzw. den stirnseitigen Planflächen ansetzen und diese angelagerten Späne beim nächstfolgenden Wechselvorgang des Werkzeuges festgedrückt werden. Da die von den Spannmitteln der Arbeitsspindel auf die Werkzeugschäfte ausgeübten Anzugkräfte extrem hohe Werte erreichen können, verursachen zwischen der Innenwandung der Werkzeugaufnahme und der Außenwandung des Werkzeugschaftes eingeklemmte Späne geringfügige Verformungen des Spindelkopfes, die Anlass für ein Unrundlaufen des Werkzeugs und für sonstige Bearbeitungsfehler sein können.

Daneben können ähnliche Probleme auftreten, wenn die feinbearbeiteten Planflächen an der Frontseite der Werkzeugaufnahme, die als Voll- oder auch als Teilflächen ausgebildet sein können, geringfügige Fehler oder aber auch Spanablagerungen aufweisen. Beim Einziehen des Werkzeugschaftes in die Spindel befinden sich dann die angelagerten Späne oder andere Ablagerungen zwischen den beiden feinstbearbeiteten Planflächen. Dies hat zur Folge, dass die Werkzeugachse um geringe Beträge gegenüber der Spindelmittelachse verkippt oder versetzt ist, was zu einem Unrundlauf des Werkzeugs während der Bearbeitung führen kann. Häufig lassen sich die dadurch entstandenen Fehler am bearbeiteten Werkzeug nur durch aufwendige Vermessungen des gesamten Werkzeugs feststellen, was einen erheblichen technischen Aufwand und daneben auch die eklatante Gefahr von beträchtlichen Ausschussmengen bedeutet.

Es sind bereits Systeme in Gebrauch, mit denen das Auftreten von Unwuchterscheinungen am Werkzeug selbst bzw. auch an der Arbeitsspindel erfasst werden können, um danach Maßnahmen zur Vermeidung bzw. Kompensation dieser Unwuchterscheinungen zu treffen. Diese können beispielsweise in einem erneuten Werkzeugwechsel bestehen, wobei der dann freiliegende Werkzeugschaft und auch die Werkzeugaufnahme in der Spindel manuell oder auch durch Ausblasen gereinigt werden können. Allerdings muss für diese Vorgänge die Arbeitsspindel lediglich zum Zweck der Überwachung hochgefahren und ggf. wieder abgebremst werden, was einen zusätzlichen Zeit- und Arbeitsaufwand erfordert.

Die durch eingequetschte Späne verursachten Verformungen der Werkzeugaufnahme und die daraus folgenden Taumelbewegungen der Werkzeugaufnahme bzw. auch des Spindelkopfes können auch durch optische Systeme beispielsweise mit Hilfe von Laserstrahlen erfasst werden, deren Messdaten in elektro-optischen Auswerteelementen aufbereitet und der Maschinensteuerung zugeführt werden.

Aus der EP 1 889 685 A ist eine Bearbeitungseinheit für programmgesteuerte spanende Werkzeugmaschinen bekannt, die ein am Maschinenständer motorisch verfahrbares Spindelgehäuse mit einer darin drehbar gelagerten Arbeitsspindel aufweist. Eine zentrisch im Inneren der Arbeitsspindel axial verschiebbare Spannzange dient zum Spannen und Lösen eines zugeführten Werkzeugschafts in einer Werkzeugaufnahme am Stirnende der Arbeitsspindel. Zur Überwachung der Form des Spindelkopfes dient eine Überwachungsvorrichtung, die mindestens eine Messeinheit enthält, welche bereits auf geringste Lageabweichungen anspricht, die z.B. durch die Ablagerung von Spänen an der jeweils feinbearbeiteten Flächenpaarung des Werkzeugschaftes und der Werkzeugaufnahme verursacht werden. Die Messvorrichtung kann mechanisierte, elektrische, elektromechanische, akustische oder optisch wirkende Sensoren enthalten, welche die Form des Spindelkopfes mit jeweils hoher Messgenauigkeit erfassen und deren Ausgangsdaten in der Auswerteeinheit verarbeitet werden. Auf diese Weise kann ein z.B. durch abgelagerte Späne verursachter Positionierfehler unmittelbar nach dem jeweiligen Spannvorgang des Werkzeugs erkannt werden, ohne dass die Arbeitsspindel angetrieben werden müsste. Die Auswerteeinheit initiiert über die Maschinensteuerung einen erneuten Wechselvorgang des Werkzeugs und eine Reinigung der Spannflächen beispielsweise durch Ausblasen. Die in dieser Bearbeitungseinheit eingesetzte Messvorrichtung erfasst lediglich Verformungen des Spindelkopfes in Umfangsrichtung, da die eingesetzten Sensoren die zylindrische Mantelfläche des Zylinderkopfes und deren Formabweichungen erfassen.

Weiterhin ist aus der DE 103 51 347 A eine Mess- und Überwachungseinrichtung für Werkzeugmaschinen bekannt, die in einem am Maschinenständer verfahrbaren Spindelgehäuse eine darin drehbar gelagerte Arbeitsspindel aufweist. Spannelemente im Inneren der Arbeitsspindel dienen zum Spannen und Lösen eines eingewechselten Werkzeugschafts in einer Werkzeugaufnahme. Um eine exakte Plananlage des Werkzeugschaftes an der Werkzeugaufnahme zu gewährleisten, ist am Spindelkopf ein Ringflansch montiert, der an seiner Stirnfläche eine Mehrzahl von äquidistant angeordneten feinbearbeiteten Teilflächen aufweist. Jeder dieser Teilflächen ist ein Sensor zugeordnet, der über innere Verbindungsleitungen mit Übertragungselementen für die Messdatenübertragung verbunden ist. Erfasst werden in diesen Sensoren und Messelementen lediglich axiale Verformungen, die bei einer nicht planen Anlage der am Werkzeugschaft ausgebildeten Anlagefläche an der ringförmigen Gegenfläche des Spindelkopfes auftreten. Die Energie- und Datenleitungen verlaufen in den jeweiligen Bauteilen, d.h. sie sind in diesen integriert angeordnet. Nachteilig bei diesem bekannten Mess- und Überwachungssystem ist es, dass die Sensorik und auch die Auswerteeinheit mit der Arbeitsspindel als Baueinheit ausgebildet sind und nur zusammen mit der Arbeitsspindel ein- und ausgebaut werden können. Dies bedeutet für die Praxis, dass ein hoher Wartungs- und Reparaturaufwand notwendig ist, falls in der Sensorik Fehler auftreten, d.h. falls einer oder auch mehrere der Sensoren ausfallen bzw. deren Verbindungen unterbrochen werden.

Aufgabe der Erfindung ist es, eine Bearbeitungseinheit der eingangs genannten Gattung zu schaffen, bei welcher die Wartung und Reparatur der Mess- und Überwachungseinrichtung das gesonderte Feststellen von Formänderungen des Fräskopfes in Umfangsrichtung und zusätzlich auch Abweichungen der koaxialen Ausrichtung der Werkzeugachse gegenüber der Spindelachse erlaubt und bei der der Aufwand zum Ein- und Ausbau der Mess- und Überwachungseinrichtung in die Arbeitsspindel vereinfacht ist.

Diese Aufgabe wird erfindungsgemäß durch die Merkmale des Patentanspruchs 1 gelöst. Die insgesamt verbesserte Messgenauigkeit wird durch die Verwendung von zwei unterschiedlichen Sensortypen erreicht, die einerseits als "Axial"-Sensoren und andererseits als "Radial"-Sensoren wirken. Die "Axial"-Sensoren erfassen den vom Anlagering des Werkzeugschaftes auf die Gegenfläche des Spindelkopfes ausgeübten axialen Druck, der durch die Kräfte der aktivierten Spannzange erzeugt wird. Da jeweils eine Mehrzahl von Sensoren über die Umfangsfläche verteilt an der ringscheibenförmigen Anlagefläche des Spindelkopfes angeordnet ist, kann eine ungleichmäßige Verteilung der Andruckkräfte über den Umfang und die dadurch hervorgerufene Verkippung der Werkzeugachse gegenüber der Spindelachse erfasst werden. Ursache für diese Erscheinungen sind in der Regel Späne, die sich an der Flächenpaarung abgelagert haben. Der zweite Sensortyp bestehend in der Regel aus mehreren "Radial"-Sensoren kann die Verformung des Außenumfangs des Spindelkopfes erfassen, die durch Fremdstoffe, Späne zwischen den Kegelflächen der Werkzeugaufnahme und des Werkzeugschaftes verursacht wird und beim Einziehen des Werkzeugschaftes in die Werkzeugaufnahme zu ggf. minimalen Verformungen des Spindelkopfes in radialer und in Umfangsrichtung führt. Erfindungsgemäß sind die Sensoren zusammen mit der elektronischen Auswerteeinheit in einem Ringkörper untergebracht, der am vorderen Ende der Arbeitsspindel lösbar befestigt ist, beispielsweise durch eine Mehrzahl von axialen Schraubbolzen. Dieser Ringkörper enthält Übertragungsmittel zur berührungsfreien Übertragung von Messdaten und Energie. Zu diesem Zweck kann im Ringkörper eine Induktionsspule untergebracht sein. Gemäß der Erfindung ist dieser Ringkörper von einem stationären Außenring umgeben, der am vorderen Ende des Spindelgehäuses lösbar befestigt ist, z.B. durch axiale Schraubbolzen. In diesem Außenring sind weitere Übertragungsmittel z.B. in Form einer Spule vorgesehen, die mit den Übertragungsmitteln des als Rotor wirkenden inneren Ringkörpers kommunizieren. Ferner sind außen am Ringkörper Kabelanschlüsse für die Energie- und Datenkabel vorgesehen. Diese Energie- und Datenkabel verlaufen in einem nach außen offenen Längskanal im Spindelgehäuse, der durch Bleche oder andere Schutzelemente abgedeckt ist.

Einer der besonderen Vorzüge der Erfindung besteht darin, dass der Außenring und auch der innere Ringkörper auf einfache und schnelle Weise einzeln oder auch gemeinsam aus- und eingebaut werden können. Im Gegensatz hierzu war es bisher notwendig, bei Funktionsstörungen des Messsystems die gesamte Spindel aus der Maschine auszubauen, was stets mit einem erheblichen Arbeitsaufwand verbunden war.

Im Folgenden wird ein Ausführungsbeispiel der Erfindung anhand der Zeichnung im Einzelnen beschrieben. Es zeigen:
- Fig. 1: eine Bearbeitungseinheit mit einer Arbeitsspindel und der Messvorrichtung in perspektivischer Explosionsdarstellung;
- Fig. 2a, 2b: axiale Schnittdarstellungen der in Fig. 1 gezeigten Bearbeitungseinheit in zwei unterschiedlichen Maßstäben.

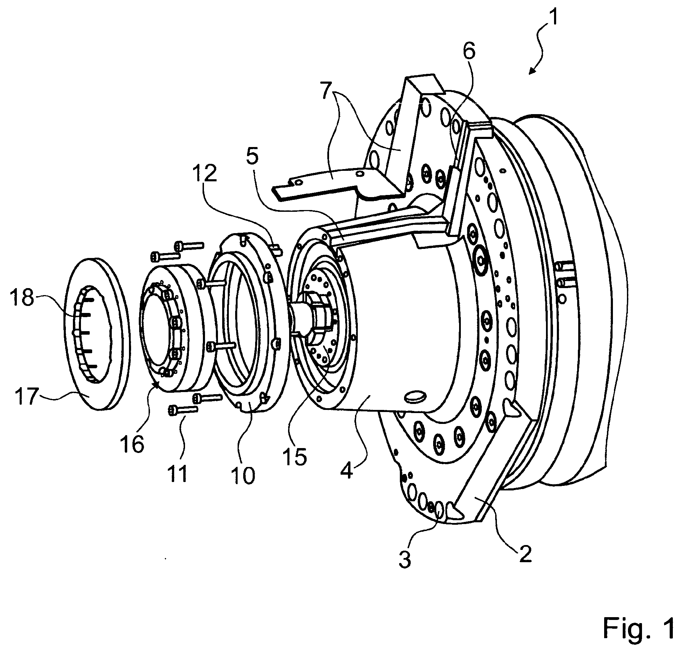

Die dargestellte Bearbeitungseinheit dient zur Durchführung von Fräs- und Bohrarbeiten an Werkstücken mit Hilfe von - nicht dargestellten - Werkzeugen, die in die Arbeitsspindel eingespannt werden. Die Bearbeitungseinheit enthält ein Gehäuse 1, das mit dem vorgegebenen Bauteil der Werkzeugmaschine befestigt bzw. zusammengebaut wird, und zwar mit Hilfe eines Ringflansches 2, der eine Vielzahl von axialen Bohrungen 3 enthält. An der Vorderseite dieses Ringflansches ist ein kegelstumpfförmiger Gehäuseteil 4 befestigt, in dessen Umfangswand mindestens eine nach außen offene Längsnut 5 eingearbeitet ist. Diese Längsnut 5 findet ihre Fortsetzung in einer Aufnahmenut 6, die im Flansch 2 ausgebildet ist. Die Längsnut 5 und deren Fortsetzung 6 bilden einen Aufnahmekanal für ein - in Fig. 1 nicht dargestelltes - Energie- und Messdatenkabel, das in diesem Kanal 5, 6 verlegt und danach durch ein am Kegelstumpf 4 lösbar befestigtes Formblech 7 abgedeckt wird.

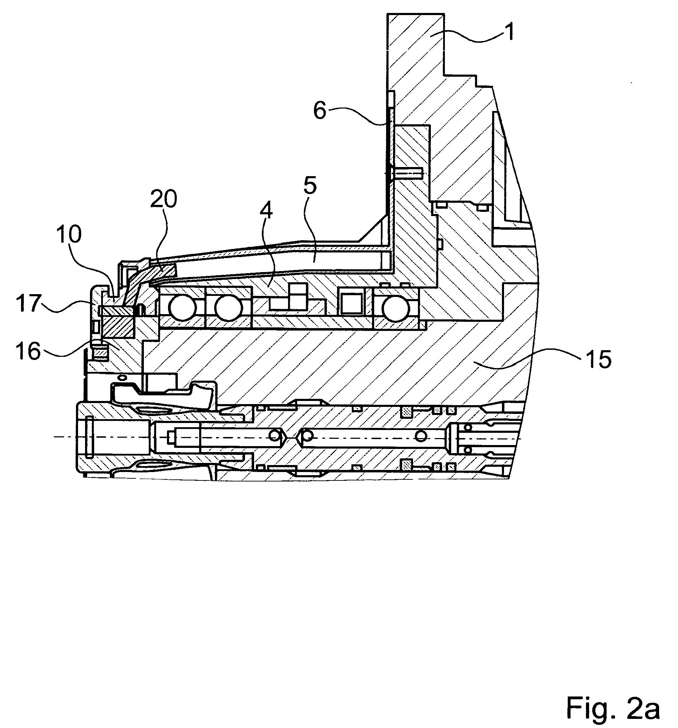

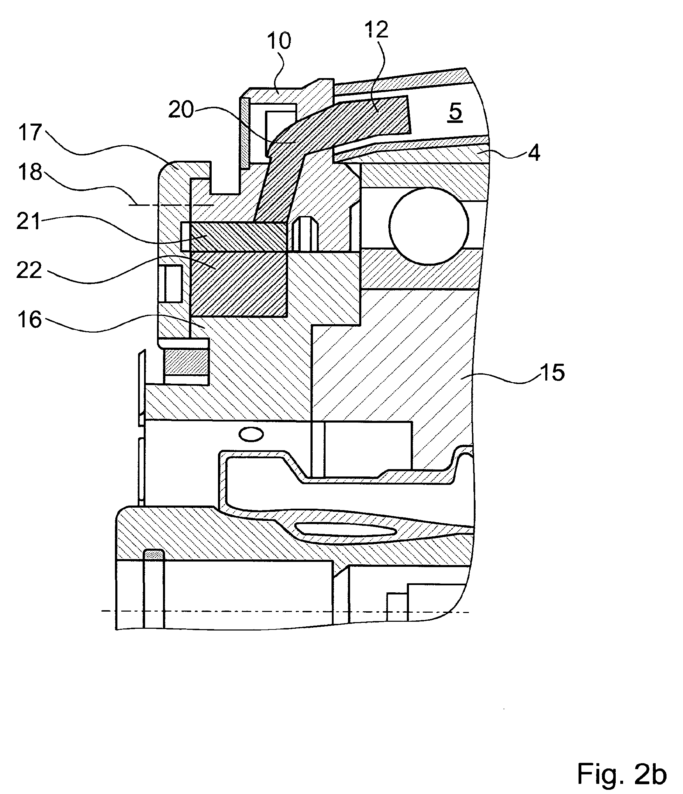

In Fig. 1 ist vor dem Stirnende des Kegelstumpfes 4 ein Ring 10 von profiliertem Querschnitt dargestellt, der mit der Stirnseite des Kegelstumpfes 4 durch eine Mehrzahl von Schraubbolzen 11 lösbar befestigt wird. Dieser Außenring 10 hat einen profilierten Querschnitt und stützt sich mit seiner in Fig. 1 rechten Stirnfläche an der linken ringförmigen Stirnfläche des Kegelstumpfes 4 ab. In diesem Außenring 10 sind Übertragungsmittel untergebracht, die der berührungslosen Übertragung von Messdaten und Energiesignalen dienen (vgl. Fig. 2a, b). Weiterhin ist an diesem Außenring ein Kabelabgang 12 für die Sensorik vorgesehen, welcher dem Kabelkanal 5 gegenüberliegt und in montiertem Zustand geringfügig in diesen Kabelkanal hineinragt.

Im Gehäuse und damit auch im Kegelstumpf 4 ist die Arbeitsspindel 15 drehbar gelagert, die hier eine herkömmliche Frässpindel ist. Mit dem Stirnende dieser Arbeitsspindel ist ein Ringkörper 16 durch eine Mehrzahl von Stiftschrauben lösbar befestigt, der zusammen mit der Arbeitsspindel dreht und einen Rotor darstellt. In diesem Rotor 16 sind Sensoren untergebracht, mit denen betriebsbedingte Verformungen der Spindel bzw. des Spindelkopfes in axialer und auch in Umfangsrichtung erfasst werden können. Verschiedene Sensortypen, beispielsweise druck-, spannungs- oder kraftsensible Sensoren, sind als Messfühler geeignet, um beispielsweise Ausrichtfehler der Spindel und/oder Formänderungen zu erfassen. Die Sensorik enthält eine mit den verschiedenen Sensoren elektronisch gekoppelte Auswerteeinrichtung, die eine Auswertung und auch eine Speicherung der erfassten Daten vornimmt und mikroprozessorgesteuert sein kann. Auch die Verschleißwerte der Spanwerkzeuge und eventuelle Beschädigungen von Maschinenbauteilen durch Stoßkollisionen können mit Hilfe dieser Sensorik erfasst, gespeichert und in der Maschinensteuerung entsprechend berücksichtigt werden.

Der Rotorring 16 hat eine glatt-zylindrische innere Umfangsfläche und einen abgestuften Querschnitt. Abgedeckt wird dieser Ringrotor 16 durch eine ringförmige Scheibe 16, die in Plananlage mit Hilfe von Stiftschrauben 18 lösbar an der planen Endfläche der Spindel befestigt ist und die Arbeitsspindel unter Freilassung der Werkzeugaufnahme zum Einspannen eines Werkzeugschaftes stirnseitig abschließt.

Wie aus Fig. 2a, 2b ersichtlich, verläuft ein im Kabelkanal 5 des Spindelgehäuses verlegtes Kabel 20 bis in den stationären Außenring 10, der über die Schraubbolzen 11 mit dem Spindelgehäuse 4 fest verbunden ist. In diesem Außenring 10 befinden sich die Anschlüsse 12 für das Energie- und Messdatenkabel 20, wobei dieses Messkabel 20 auch in der in Fig. 2b dargestellten Weise mit einem in dem stationären Außenring 10 angeordneten Übertragungselement 21 verbunden ist, dessen Gegenelement 22 sich in dem mit der Spindel drehenden Rotorring 16 befindet.

Die Erfindung ist nicht auf die dargestellten Ausführungsbeispiele beschränkt, sondern erstreckt sich auch auf Varianten die unter dem Schutzumfang der beigefügten Ansprüche fallen. Beispielsweise kann die Auswerteeinheit in den Innenring, d.h. den Rotor 16, funktional und auch konstruktiv integriert sein. Die Auswerteeinheit kann jedoch auch außerhalb in einem äußeren Bauteil der Spindel bzw. des Spindelgehäuses angeordnet und über das Kabel 20 mit der Sensorik verbunden sein.

## Patentansprüche

1. Bearbeitungseinheit für eine programmgesteuerte Werkzeugmaschine mit
- einem Gehäuse (1, 4)
- einer im Gehäuse drehbar gelagerten Arbeitsspindel (15) mit Drehantrieb,
- einer in der Arbeitsspindel (15) vorgesehenen Werkzeugaufnahme mit Spannmitteln zum lösbaren Positionieren eines Werkzeugschaftes in der Werkzeugaufnahme und
- einer Messvorrichtung zur Positions- und Zustandsüberwachung eines Werkzeugschafts in der Werkzeugaufnahme, die eine Sensorik mit einer Mehrzahl von Sensoren sowie einer elektronischen Auswerteeinheit für die Messergebnisse aufweist, wobei
die Sensoren Axial- und Radialsensoren sind, die in einem Ringkörper (16) angeordnet sind, der am vorderen Endteil der Arbeitsspindel (15) lösbar befestigt ist, **dadurch gekennzeichnet, dass**
- die Axial- und die Radialsensoren über berührungslose Übertragungsmittel mit der Auswerteeinheit durch zumindest ein von außen zugängliches und lösbares Energie- und Messdatenkabel (20) verbunden sind, und im Spindelgehäuse (1, 4) Kabelkanäle (5, 6) zur Aufnahme des Kabels (20) vorgesehen sind, die durch lösbar befestigte Abdeckbleche (7) verschließbar sind.

2. Bearbeitungseinheit nach Anspruch 1,
**dadurch gekennzeichnet, dass**
der Ringkörper (16) die Axialsensoren an seiner Stirnseite und die Radialsensoren an seinem Umfang trägt.

3. Bearbeitungseinheit nach Anspruch 1 oder 2,
**dadurch gekennzeichnet, dass**
der Ringkörper (16) durch axiale Schraubbolzen an der vorderen Stirnseite der Arbeitsspindel (15) lösbar befestigt ist.

## Claims

1. A machining unit for a program-controlled machine tool, comprising
- a housing (1, 4)
- a work spindle (15) rotatably mounted in the housing with rotary drive,
- a tool support, which is provided in the work spindle (15) and has clamping means for the detachable positioning of a tool shaft in the workpiece support, and
- a measuring device for monitoring the position and condition of a tool shaft in the tool support, which has a sensor system having a plurality of sensors and an electronic assessment unit for the measuring results, wherein
the sensors are axial and radial sensors which are arranged in an annular body (16) which is detachably mounted on the front end part of the work spindle (15),
**characterized in that**
- the axial and radial sensors are connected via contactless transfer means having an assessment unit by at least one externally accessible and detachable energy and measurement data cable (20), and cable channels (5,6) for receiving the cable (20) are provided in the spindle housing (1,4), wherein said cable channels can be closed by detachably attached cover plates (7).

2. The machining unit according to claim 1,
**characterized in that**
the annular body (16) carries the axial sensors on the end side thereof and the radial sensors on the circumference thereof.

3. The machining unit according to claim 1 or 2,
**characterized in that**
the annular body (16) is detachably attached to the front end side of the work spindle (15) by axial bolts.

## Revendications

1. Unité d'usinage pour une machine outil à contrôle numérique, comportant
- un boîtier (1, 4)
- une broche de travail (15) à entraînement en rotation, montée en rotation dans le boîtier,
- un porte-outil prévu dans la broche de travail (15), avec des moyens de serrage destinés à mettre en place de manière amovible une tige d'outil dans le porte-outil, et
- un dispositif de mesurage destiné à surveiller l'état et la position d'une tige d'outil dans le porte-outil, comportant un système de capteurs composés d'une pluralité de capteurs ainsi que d'une unité électronique d'interprétation des résultats de mesure,
- les capteurs étant des capteurs axiaux et radiaux disposés dans un corps annulaire (16) fixé de manière amovible à l'extrémité antérieure de la broche de travail (15),
**caractérisée en ce que**
- les capteurs axiaux et radiaux à transmission sans contact sont reliés à l'unité d'interprétation par au moins un câble d'alimentation et de données de mesure (20) accessible par l'extérieur, et **en ce que** sont prévus dans le boîtier de la broche (1, 4) des conduits de câble (5, 6) destinés à accueillir le câble (20), pouvant être fermés par des plaques de recouvrement (7) fixées de manière amovible.

2. Unité d'usinage selon la revendication 1,
**caractérisée en ce que**
le corps annulaire (16) porte les capteurs axiaux sur sa face avant et les capteurs radiaux sur sa circonférence.

3. Unité d'usinage selon les revendications 1 ou 2,
**caractérisée en ce que**
le corps annulaire (16) est fixé de manière amovible par des boulons filetés axiaux sur la face avant de la broche de travail (15).
